# EUROPÄISCHE PATENTSCHRIFT

(11) **EP 0 450 284 B1**
(45) Veröffentlichungstag und Bekanntmachung des Hinweises auf die Patenterteilung: **20.04.1994**
(21) Anmeldenummer: 91101912.3
(22) Anmeldetag: 12.02.1991
(51) Int. Cl.: B60R 21/16

(54) **Aufblasbarer Luftsack**
Inflatable airbag
Coussin d'air gonflable

(30) Priorität: 04.04.1990 DE 4010796
(43) Veröffentlichungstag der Anmeldung: 09.10.1991
(73) Patentinhaber: MERCEDES-BENZ AG, 70327 Stuttgart (DE)
(72) Erfinder: Henseler, Wolfgang, W-7400 Tübingen (DE); Müller, Manfred, W-7301 Deizisau (DE)

(56) Entgegenhaltungen:
- GB-A- 1 340 549
- US-A- 4 004 827

## Beschreibung

Die Erfindung betrifft einen aufblasbaren Luftsack nach dem Oberbegriff des Anspruchs 1.

In der DE-A- 25 52 815 ist ein aufblasbarer Luftsack für den Fahrgastraum eines Kraftfahrzeugs beschrieben, dessen Sackgewebe durch Verbinden der Ränder zu einem Luftsack zusammengesetzt ist.

Der Luftsack weist eine Öffnung für den Anschluß an einen Gasgenerator auf, die von einem zusätzlichen, mit dem Luftsack verbundenen Verstärkungsgewebe umgeben ist. Des weiteren sind auch die Verbindungsnähte auf der Luftsackinnenseite mit aufvulkanisierten oder aufgeklebten Gewebestreifen überbrückt.

Der Erfindung liegt die Aufgabe zugrunde, eine eingeformte Öffnung in einem gattungsgemäßen Luftsack herstellungsgünstig gegen Belastungsschäden zu schützen.

Die Aufgabe wird durch die kennzeichnenden Merkmale des Anspruchs 1 gelöst.

Die Öffnungen und deren Umgebung in einem Luftsack werden durch die Gasdruckkräfte beim Aufblasen und durch die heißen Füllgase stark beansprucht und müssen deshalb gegenüber dem Sackgewebe zusätzlich verstärkt werden.

Ein verstärkendes, zusätzlich in den Luftsack einzuarbeitendes Gewebestück kann eingespart werden, indem man zwei Gewebeenden überlappt anordnet, so daß beide den vollständigen Randbereich und die Öffnung des Luftsacks bilden.
Dabei kann bereits der Zuschnitt des Sackgewebes zwei Öffnungen beinhalten, die nach der Überlappung der Gewebeenden deckungsgleich liegen, oder aber die Öffnung wird nach der Verbindung beider Gewebeenden im überlappten Bereich eingebracht.

Sind die beiden sich überlappenden Gewebeenden noch einmal durch eine zusätzliche Befestigungsnaht verbunden, die gleichgerichtet der Verbindungsnaht auf der gegenüberliegenden Seite der Öffnung angeordnet ist, oder werden beide Gewebeenden flächig miteinander verbunden, so erhält der durch Druckkräfte oder Temperaturen stark belastete Randbereich eine große Sicherheit gegen ein Aufreißen der Öffnungsränder. Gleichzeitig wird dadurch auch die eigentliche Verbindungsnaht der Gewebeenden unterstützt.

Ein Ausführungsbeispiel der Erfindung ist in der Zeichnung dargestellt.
Es zeigen:
- Fig. 1: einen Fahrzeuginnenraum mit einem aufgeblasenen Luftsack, und
- Fig. 2: einen Mantelzuschnitt des Sackgewebes des Luftsacks.
- Fig. 3a, 3b: in verkleinerter Darstellung diesen Mantelzuschnitt in verbundenem Zustand

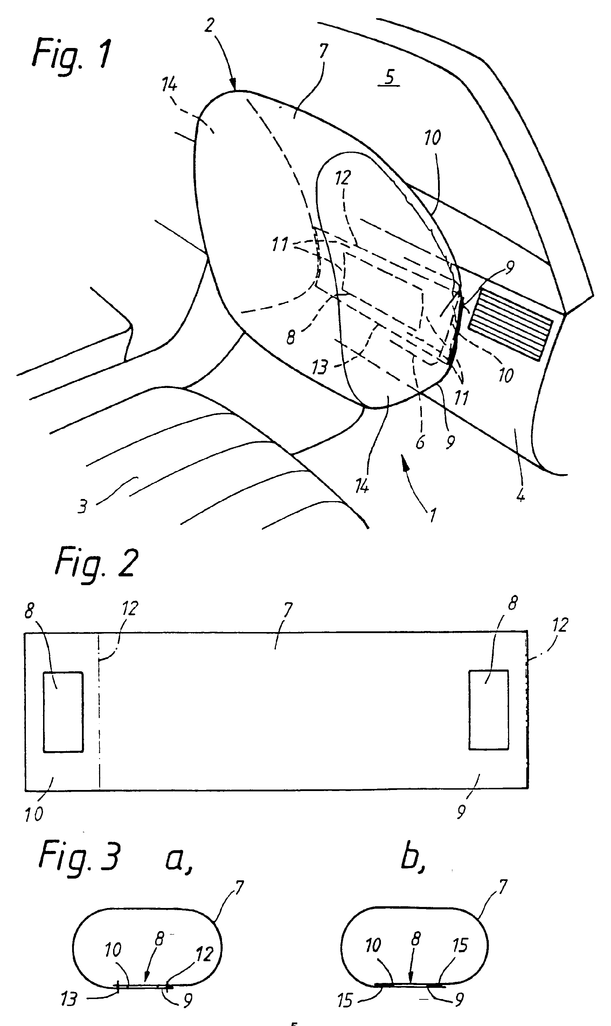

In Fig. 1 ist ein Fahrzeuginnenraum 1 eines Kraftwagens dargestellt, in dem ein Luftsack 2 aufgeblasen zwischen einem nicht dargestellten Fahrzeuginsassen auf einem Beifahrersitz 3 und einer Armaturentafel 4 mit der anschließenden Windschutzscheibe 5 liegt. Diese Situation wäre nach einer Verunfallung des Fahrzeugs gegeben, bei der ein Crash-Sensor einen nicht näher gezeigten Gasgenerator betätigt, der den in ein Fach 6 der Armaturentafel 4 eingefalteten Luftsack 2 mit Gas füllt, wodurch dieser eine Fachabdeckung wegdrückt und aus dem Fach 6 hervortritt und sich vor dem Fahrzeuginsassen schützend aufbläht.

Der Luftsack 2 weist in einem im Fach 6 untergebrachten Bereich eine in das Sackgewebe 7 (Mantelteil) eingebrachte Öffnung 8 zum Anschluß des Gasgenerators oder eines Gasgeneratorgehäuses auf.

Dabei ist der Mantel des Luftsacks 2 derart ausgebildet, daß sich dessen beide Gewebeenden 9 und 10 soweit überlappen, daß durch beide der vollständige Randbereich 11 der eingeformten Öffnung 8 und diese selbst gebildet ist. Dadurch ist der Randbereich 11 der Öffnung 8 also doppellagig und hält hierdurch der Belastung durch die Druckkräfte und durch die Temperaturen des Gasgenerators besser stand. Es ist vorteilhaft, neben der Verbindungsnaht 12 beider Gewebeenden 9,10 zusätzlich eine Befestigungsnaht 13 vorzusehen, die gleichgerichtet der Verbindungsnaht 12 auf der gegenüberliegenden Seite der Öffnung 8 angeordnet ist (Fig.3a), oder aber die Gewebeenden 9,10 flächig, zum Beispiel durch eine Klebemasse 15, aneinander festzulegen (Fig.3b).

Wie Fig. 2 zeigt, ist es ohne weiteres möglich, in beiden Gewebeenden 9,10 eine Öffnung 8 vorzusehen, welche miteinander in Überdeckung gebracht werden, wonach die Verbindungsnaht 12 geschlossen wird und nach der Komplettierung dieses Luftsackgewebes 7 mit den Seitenteilen 14 ein kompletter Luftsack 2 mit einem doppellagig verstärktem Randbereich 11 um die Öffnung 8 gebildet ist.

Diese Verstärkung des Randbereichs ist natürlich bei jeder Öffnung im Luftsack möglich, in deren Nähe eine Verbindungsnaht des Sackgewebes verläuft oder angeordnet werden kann.

## Patentansprüche

1. Aufblasbarer Luftsack (2), zum Schutze der Insassen eines Fahrzeugs vor einem Aufprall auf Teile im Fahrzeuginnenraum, dessen Sackgewebe (7) eine Öffnung (8) aufweist, deren Randbereich (11) durch ein weiteres, mit diesem Sackgewebe (7) verbundenes Gewebestück verstärkt ist,
**dadurch gekennzeichnet**,
daß Verbindungsbereiche zweier Gewebeenden (9 und 10) des Luftsacks (2) in der Nähe des Randes der Öffnung (8) vorgesehen sind, und daß die Gewebeenden (9, 10) soweit überlappt sind, daß der vollständige Randbereich (11) der Öffnung (8) durch beide Gewebeenden (9 und 10) gebildet ist, so daß doppellagige Ränder entstehen.

2. Aufblasbarer Luftsack nach Anspruch 1,
**dadurch gekennzeichnet**,
daß eine Verbindungsnaht (12) für die beiden Gewebeenden (9 und 10) des Luftsacks (2) im Verbindungsbereich vorgesehen ist.

3. Aufblasbarer Luftsack nach Anspruch 1,
**dadurch gekennzeichnet**,
daß die beiden Gewebeenden (9 und 10) im Verbindungsbereich miteinander verklebt sind.

4. Aufblasbarer Luftsack nach Anspruch 2,
**dadurch gekennzeichnet**,
daß die Gewebeenden (9, 10) durch eine zusätzliche Befestigungsnaht (13) verbunden sind, die gleichgerichtet der Verbindungsnaht (12) auf der gegenüberliegenden Seite der Öffnung (8) angeordnet ist.

5. Aufblasbarer Luftsack nach Anspruch 1,
**dadurch gekennzeichnet**,
daß die Öffnung (8) an beiden Gewebeenden (9, 10) im Zuschnitt des Sackgewebes (7) vorgesehen ist.

6. Aufblasbarer Luftsack nach einem der vorherstehenden Ansprüche,
**dadurch gekennzeichnet**,
daß die Öffnung (8) für die Aufnahme eines Gasgenerators bzw. eines Gasgeneratorgehäuses vorgesehen ist.

## Claims

1. Inflatable airbag (2), for the protection of the occupants of a vehicle from an impact on parts in the vehicle passenger compartment, the bag fabric (7) of which has an opening (8) whose edge region (11) is reinforced by a further fabric piece joined to this bag fabric (7), characterised in that joining regions of two fabric ends (9 and 10) of the airbag (2) are provided in the vicinity of the edge of the opening (8), and in that the fabric ends (9, 10) are overlapped to such an extent that the complete edge region (11) of the opening (8) is formed by the two fabric ends (9 and 10), resulting in double-layered edges.

2. Inflatable airbag according to Claim 1, characterised in that a joining seam (12) is provided in the joining region for the two fabric ends (9 and 10) of the airbag (2).

3. Inflatable airbag according to Claim 1, characterised in that the two fabric ends (9 and 10) are stuck together in the joining region.

4. Inflatable airbag according to Claim 2, characterised in that the fabric ends (9, 10) are joined by an additional fastening seam (13) which is arranged in the same direction as the joining seam (12) on the opposite side of the opening (8).

5. Inflatable airbag according to Claim 1, characterised in that the opening (8) is provided at both fabric ends (9, 10) in the initial cut of the bag fabric (7).

6. Inflatable airbag according to one of the preceding claims, characterised in that, the opening (8) is provided to receive a gas generator or a gas generator casing.

## Revendications

1. Coussin d'air gonflable (2), pour la protection des passagers d'un véhicule contre l'impact sur des parties situées dans l'habitacle du véhicule, dont le matériau de coussin (7) présente une ouverture (8), dont la zone marginale (11) est renforcée au moyen d'une pièce de matériau supplémentaire, reliée à ce matériau de coussin (7), caractérisé en ce que les zones de liaison de deux extrémités de matériau (9 et 10) du coussin d'air (2) sont prévues à proximité de l'ouverture (8), et en ce que les extrémités de matériau (9, 10) sont placées en chevauchement, de manière que la totalité de la zone marginale (11) de l'ouverture (8) soit formée par les deux extrémités de matériau (9 et 10), de façon à produire des bordures à double couche.

2. Coussin d'air gonflable selon la revendication 1, caractérisé en ce qu'est prévu dans la zone de liaison un cordon de soudure (12) pour les deux extrémités de matériau (9 et 10) du coussin d'air (2).

3. Coussin d'air gonflable selon la revendication 1, caractérisé en ce que les deux extrémités de matériau (9 et 10) sont collées ensemble dans la zone de liaison.

4. Coussin d'air gonflable selon la revendication 1, caractérisé en ce que les extrémités de matériau (9, 10) sont reliées au moyen d'un cordon de fixation (13) supplémentaire, disposé selon la même orientation que celle du cordon de liaison (12), situé du côté opposé par rapport à l'ouverture (8).

5. Coussin d'air gonflable selon la revendication 1, caractérisé en ce que l'ouverture (8) est prévue dans les deux extrémités de matériau (9, 10), dans la pièce découpée du matériau de coussin (7).

6. Coussin d'air gonflable selon l'une des revendications précédentes, caractérisé en ce que l'ouverture (8) est prévue pour recevoir un générateur de gaz ou un boîtier de générateur de gaz.
